# EUROPEAN PATENT SPECIFICATION

(11) **EP 0 454 464 B1**
(45) Date of publication and mention of the grant of the patent: **24.08.1994**
(21) Application number: 91303755.2
(22) Date of filing: 25.04.1991
(51) Int. Cl.: G11B 27/30

(54) **Digital signal reproducing apparatus**
Vorrichtung zur Wiedergabe von digitalen Signalen
Appareil de reproduction de signaux digitaux

(30) Priority: 26.04.1990 JP 110808/90
(43) Date of publication of application: 30.10.1991
(73) Proprietor: SONY CORPORATION, Tokyo 141 (JP)
(72) Inventor: Nagai, Michio, c/o Patents Division, Shinagawa-ku, Tokyo 141 (JP); Seki, Takahito, c/o Patents Division, Shinagawa-ku, Tokyo 141 (JP)
(74) Representative: Cotter, Ivan John

(56) References cited:
- EP-A- 0 246 883
- GB-A- 2 192 089
- PATENT ABSTRACTS OF JAPAN vol. 7, no. 238 (P-231) 22 October 1983,& JP-A-58 125208
- PATENT ABSTRACTS OF JAPAN vol. 14, no. 021 (P-990) 17 January 1990; & JP-A-01 263976

## Description

This invention relates to digital signal reproducing apparatus.

When a video signal and an audio signal are recorded on a magnetic tape by a helical scan rotary head assembly in the form of oblique (slanting) tracks at unit time increments and then reproduced, the video and audio signals are generally in practice converted into the form of digital data before being recorded on and/or reproduced from the magnetic tape, because the video and audio data can be recorded and/or reproduced at high definition if they are converted into the form of digital data.

In the case of a video tape recorder (VTR) - hereinafter referred to as a digital VTR - in which the video signal is digitised and then recorded, the recorded digital data comprising the video signal and so forth are divided into blocks of predetermined length. An error correction code called a parity code is added to every block, together with the video data. Also, identifying (ID) data is added to every block. The recorded ID data comprises a variety of control data such as track number, block number, programme number, start ID data, skip ID data and so on.

In that case, some ID data (such as track number, block number and so on) are recorded in each block within a video data recording area, and other ID data (such as start ID data, skip ID data and so on) are recorded in each block of a sub-data area which is provided independently of the video data recording area.

The ID data is detected from a reproduced signal not only in a normal speed reproduction mode, but also in a high speed search mode in which a necessary event is searched for in a fast forward mode and so on. However, ID data cannot accurately be detected from the reproduced data without difficulty in the high speed search mode, because a magnetic head used for reproduction does not always, in that mode, trace each of the tracks on the magnetic tape.

UK patent application number GB-A-2192089 discloses a system for detecting a particular value of control data, such as start ID data indicating the beginning of a particular programme, recorded in oblique tracks on a magnetic tape. Each time a start ID bit is detected, a parity check is carried out on the reproduced data and a parity flag is set to indicate whether or not the data has been reproduced without error. The start ID bit and parity flag are substituted into an array variable and a control program determines from the array elements for the last n detections how many times a start ID bit of a particular value has occurred in combination with a parity flag indicating no error. If the resulting count exceeds a preset number, then successful identification of the start of a programme is indicated. Thus, identification of particular control data depends on the result of a parity check.

According to the present invention there is provided apparatus for reproducing a digital signal recorded in data blocks, each including synchronising data and identifying data, on tracks formed slantwise and sequentially on a magnetic tape by a rotary head, which apparatus comprises playback means for driving the magnetic tape at a speed higher than a normal playback speed and reproducing the digital signal from the tracks, the apparatus being characterised by:
first detector means for detecting the synchronising data in respective data blocks of the reproduced digital signal and generating at least one gate pulse in response to detection of the synchronising data; and second detector means including gate means, for gating a plurality of sequentially received identifying data in response to said at least one gate pulse and means for subjecting the gated identifying data to identification on the basis of a majority rule.

A digital signal reproducing apparatus embodying the invention and described hereinbelow can eliminate or at least alleviate the aforenoted disadvantages of the prior art wherein ID data cannot be accurately detected without difficulty. Identifying data is detected in a majority logic fashion so that the identifying data can be detected from a reproduced signal with high accuracy. Further, in the preferred apparatus, only identifying data included in the reproduced signal in intervals in which an accurate reproduction of the signal takes place is supplied to a majority circuit as identifying data, so that the identifying data can be detected from the reproduced signal with high accuracy.

The invention is particularly (but not exclusively) applicable to digital video tape recorders (digital VTRs) and, more particularly, to video tape recorder technology for detecting data in a high speed search mode.

The invention will now be further described, by way of illustrative and non-limiting example, with reference to the accompanying drawings, in which like references are used to identify the same or similar parts in the several figures, and in which:
Figure 1 is a schematic block diagram of a digital data reproducing apparatus according to an embodiment of the invention;
Figure 2 is a schematic block circuit diagram of a portion of the apparatus;
Figures 3A to 3E are respective timing charts to which reference is made in explaining the operation of the apparatus;
Figures 4A to 4C, 5A and 5B are schematic representations of examples of data formats used in the apparatus; and
Figures 6A to 6D are respective timing charts to which reference is made in explaining the operation of the apparatus.

A digital data reproducing apparatus according to an embodiment of the invention will now be described with reference to the accompanying drawings. In this embodiment, the digital data reproducing apparatus is applied to a digital VTR which reproduces a video signal converted to a digital signal.

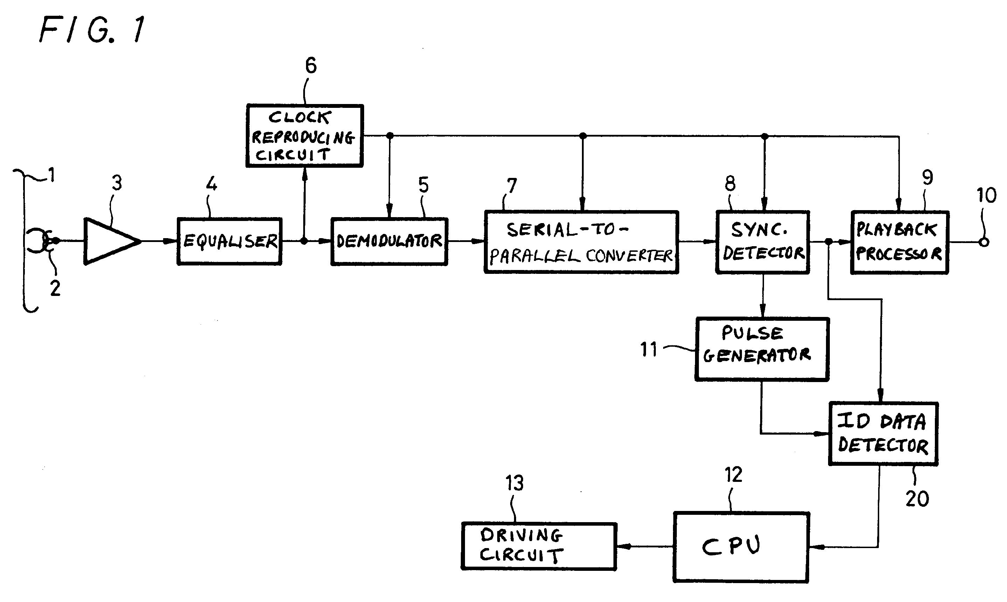

Figure 1 shows in block form the overall arrangement of the digital data reproducing apparatus. A signal reproduced from a magnetic tape 1 by a magnetic head 2 attached to a rotary head drum (not shown) is supplied through a pre-amplifier 3 and an equaliser 4 to a demodulator circuit 5, the reproduced signal being demodulated by the demodulator circuit 5 to provide digital data. The output of the equaliser 4 is also supplied to a clock reproducing circuit 6, which generates a clock signal (hereinafter referred to as "the reproduced clock signal") which is synchronised with the reproduced signal. The demodulated digital data from the demodulator circuit 5 is supplied to a serial-to-parallel converter circuit 7, in which it is converted into parallel data, and the thus-converted parallel data is supplied to a synchronising detector circuit 8. The synchronising detector circuit 8 detects a synchronising signal incorporated in the reproduced data. In this embodiment, the synchronising signal is incorporated in each of plural blocks of reproduced recorded data and the synchronising signal is detected from each block of reproduced data. Reproduced data from the synchronising detector circuit 8 is supplied to a playback processor circuit 9, in which it is processed in a predetermined reproduced signal processing manner, and a reproduced video signal is supplied to an output terminal 10.

The reproduced clock signal from the clock reproducing circuit 6 is supplied to the demodulator circuit 5, the serial-to-parallel converter circuit 7, the synchronising detector circuit 8 and the playback processor circuit 9 so that the circuits 5, 6, 8 and 9 are enabled to perform signal processing in synchronism with the reproduced clock signal.

The reproduced data from the synchronising detector circuit 8 are supplied to an identifying (ID) data detector circuit 20, which detects ID data incorporated in the reproduced data.

In that regard, a data valid signal is generated by the synchronising detector circuit 8 on the basis of the synchronising signal detected thereby, the data valid signal is supplied to a pulse generator circuit 11, and the pulse generator circuit 11 generates an ID load pulse signal. The data valid signal becomes of a high level "1" when a synchronising signal is detected from the data reproduced for each block and of a low level "0" when a synchronising signal is not detected from the reproduced data. When it detects that the data valid signal becomes of the high level "1", the pulse generator circuit 11 outputs an ID load pulse which is used to extract the ID data at a predetermined timing.

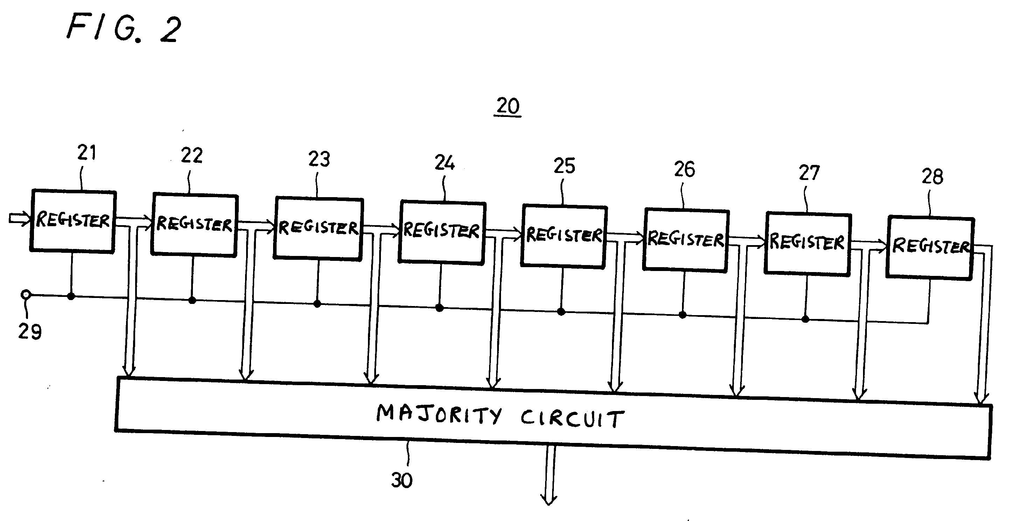

The ID load pulse signal is supplied to the ID detector circuit 20, which extracts ID data on the basis of the ID load pulse signal. In this embodiment, as will be described later, the ID detector circuit 20 includes a majority circuit (decision by majority circuit) 30 (Figure 2) which is used to identify the ID data extracted by the ID detector circuit 20 in a high speed search mode.

ID data from the ID detector circuit 20 is supplied to a central processing unit (CPU) 12 which controls the operation of the VTR, and the information contents of the reproduced ID data are identified by the CPU 12 to thereby supply, for example, a transport control signal to a driving circuit 13 so that the transport of the magnetic tape 1 is controlled.

Figure 2 shows the circuit arrangement of the ID detector circuit 20. In this embodiment, as shown in Figure 2, the ID detector circuit 20 is composed of eight registers 21 to 28 connected in cascade, and the majority circuit 30, to which data latched in the eight registers 21 to 28 are supplied. Reproduced data from the synchronising detector circuit 8 (Figure 1) are sequentially supplied to the eight registers 21 to 28 connected in cascade. The ID load pulse signal is supplied to all of the registers 21 to 28, via a terminal 29, from the pulse generator circuit 11, and, in response to an ID load pulse, each of the eight registers 21 to 28 latches the ID data so that the latest eight reproduced ID data are always set in the respective eight registers 21 to 28.

The ID data latched in the respective registers 21 to 28 are supplied to the majority circuit 30 which determines the output of ID data according to a majority rule. More specifically, when the ID data supplied from the respective registers 21 to 28 are all the same, these ID data are directly outputted from the majority circuit 30, while, when a variety of ID data are supplied from the respective registers 21 to 28, the same kind of ID data supplied from many more of the registers are outputted from the majority circuit 30. That is, the majority circuit 30 outputs whichever of the data inputted thereto that is in the majority.

Conditions under which data are recorded on the magnetic tape 1 to be reproduced by the VTR of this embodiment will now be described with reference to Figures 3A to 3E and the following figures of the drawings.

In this embodiment, as shown in Figure 3A, slanting tracks T1, T2, T3, etc. are sequentially formed on the magnetic tape 1 and video signals converted to digital data or the like are recorded on the tracks T1, T2, T3, etc., respectively. In this case, a central portion of each of the tracks T1, T2, T3, etc. is allocated as a video data area in which video signal data is recorded, and another portion (upper end) near an end of the video data area is allocated as a sub-data area.

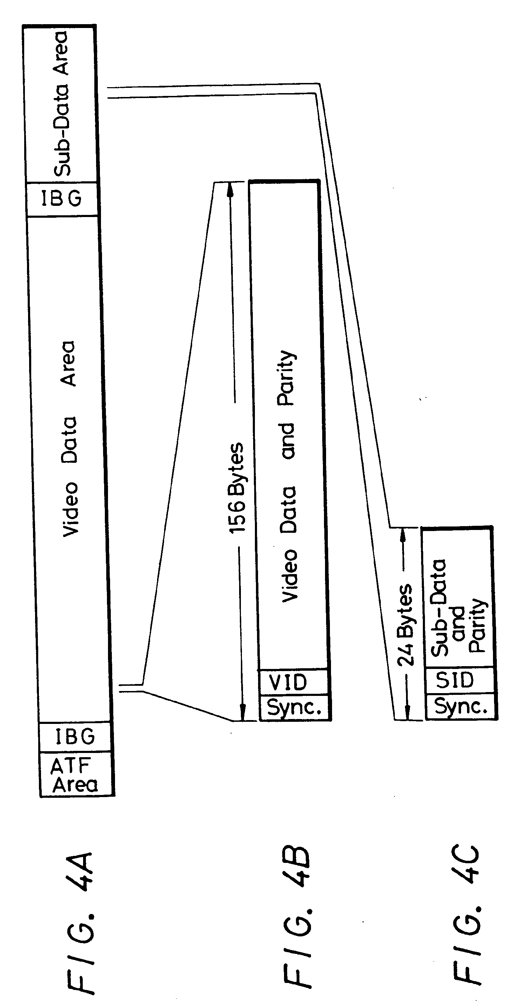

Each of the tracks T1, T2, T3, etc. will be described more fully with reference to Figures 4A to 4C. As shown in Figure 4A, a starting portion of each track is allocated as an automatic tracking control (ATF) pilot signal recording area, and a video data area is formed with a predetermined spacing (IBG) between the video data area and the ATF pilot signal recording area. Further, a sub-data area is formed with a predetermined spacing (IBG) between the sub-data area and the video data area.

As shown in Figure 4B, each of a plurality of data blocks in the video data area, in which the digitised video signal is recorded, is formed of 156 bytes. A synchronising signal and video ID data (VID) are recorded in a starting portion of each block, and video data and parity (error correction code) information are recorded in the remainder of the block. The video ID data in one block comprises 2 bytes (16 bits).

As shown in Figure 4C, each of a plurality of data blocks in the sub-data area, in which a variety of sub-data are recorded, is formed of 24 bytes, the length of one block thus being shorter than that of one block of the video data area. A synchronising signal and sub ID data (SID) are recorded in a starting portion of each block and a variety of sub-data and parity information are recorded in the remainder of the block. The sub ID data in one block comprises 2 bytes (16 bits).

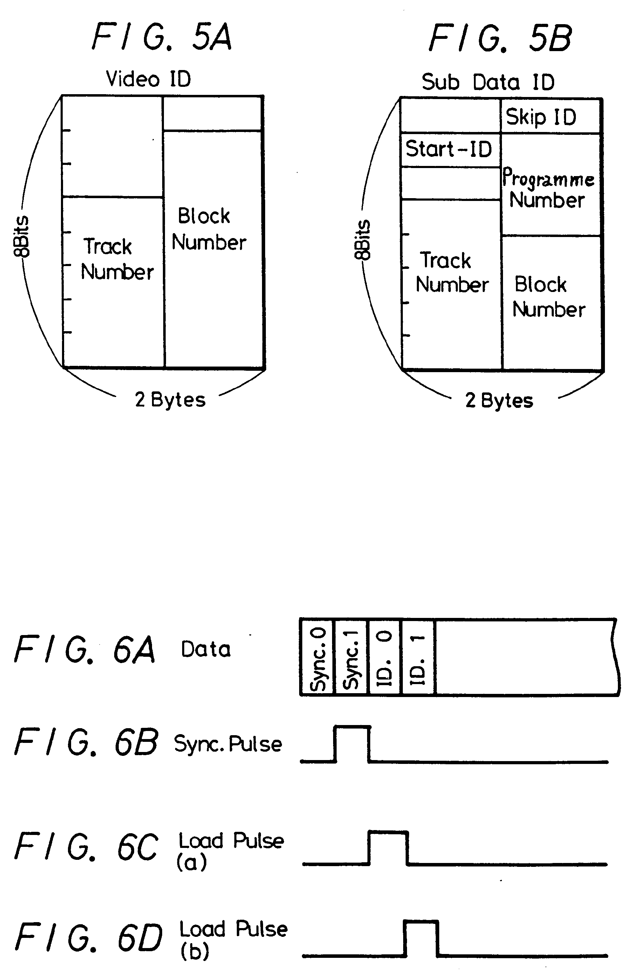

The 2 bytes of video ID data recorded in the video data area comprise, as shown in Figure 5A, 5 bits of track number data and 7 bits of block number data. Further, the 2 bytes of sub ID data recorded in the sub data area comprise, as shown in Figure 5B, one bit of start ID data, one bit of skip ID data, 5 bits of track number data, 3 bits of programme number data and 4 bits of block number data. The start ID data and the skip ID data are used to find the starting portion of a recorded event in a high speed index search mode and so on.

The operation of reproducing recorded data from the tracks as thereby formed will now be described.

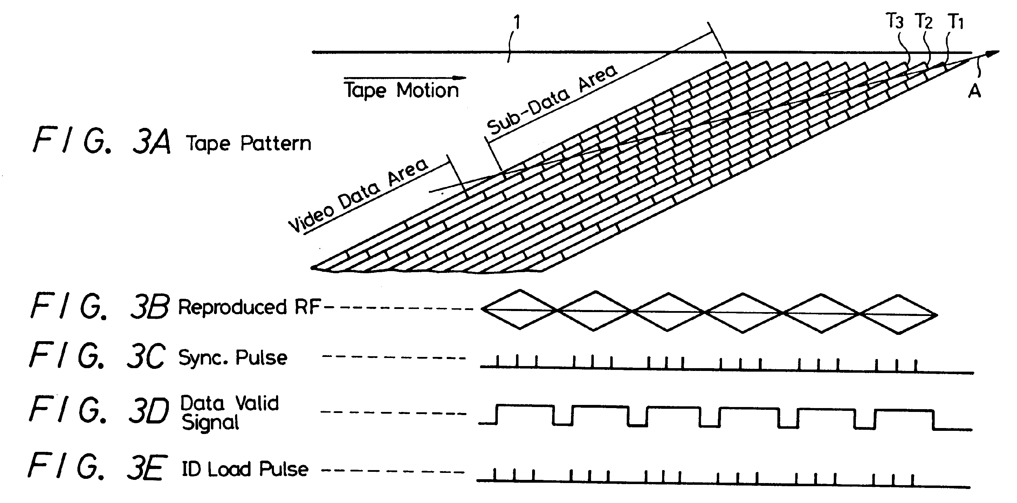

In a normal speed playback mode, the magnetic head 2 scans respective tracks in a predetermined order. However, when a high speed search is carried out, the locus of movement of the magnetic head 2 on the magnetic tape 1, as shown in Figure 3A by an arrow A, spreads over a plurality of tracks, so that, the higher the search speed becomes, the shorter the scanning time of the magnetic head 2 per track becomes. In that case, recording azimuth angles of the respective tracks T1, T2, T3, etc. are alternately changed at every track so that, as shown in Figure 3B, the envelope waveform of the reproduced radio frequency (RF) signal repeatedly increases and decreases. When the envelope value is at a maximum the azimuth angle of the playback head is coincident with that of the recording track, while when the envelope value is at a minimum the azimuth angle of the playback head is different from that of the track.

When such a reproduced RF signal is obtained, the synchronising signal incorporated in each block of the reproduced signal is detected by the synchronising detector circuit 8 near the portion where the envelope value becomes about maximum, as shown in Figure 3C. The data valid signal (see Figure 3D), which becomes of high level "1" during the periods in which the synchronising signal is detected, is supplied from the synchronising detector circuit 8 to the pulse generator circuit 11, and the pulse generator circuit 11 generates ID load pulses (see Figure 3E) only during the periods during which the data valid signal is at the high level "1". The ID load pulses are supplied to the ID detector circuit 20, whereby ID data are sequentially set in the respective registers 21 to 28 of the ID detector circuit 20.

In more detail, the ID data are recorded after the synchronising signal at the starting portion of each block in the form of a plurality of bits as shown in Figure 6A. In order that the ID data may be extracted, the ID data are set by an ID load pulse which, as shown in Figure 6C, is generated by the ID load pulse signal going to the high level, to cause extraction of the necessary ID data, with a predetermined time delay after a detected synchronising signal pulse shown in Figure 6B. More specifically, when ID data recorded at a first bit of the ID data recording portion is to be extracted, the ID load pulse signal goes to the high level to produce a load pulse (a) with a delay of time corresponding to one bit after the detected synchronising signal pulse, as shown in Figure 6C. Similarly, when ID data recorded at the second bit of the ID data recording portion is to be extracted, the ID load pulse signal goes to the high level to produce a load pulse (b) with a delay of time corresponding to 2 bits after the detected synchronising pulse, as shown in Figure 6D.

The ID data as thus extracted and sequentially set in the respective registers 21 to 28 are identified by the majority circuit 30 on the basis of the majority rule. The ID data are thus accurately identified by the majority rule so that the ID data detection accuracy in the high speed search mode can be increased. That is, since the eight latest reproduced ID data are set in the eight registers 21 to 28, the eight reproduced ID data are constantly checked by the majority rule so that, even if error temporarily occurs in the reproduced data, data to be identified can be prevented from being affected by such error. Thus, even in the high speed search mode, accurate ID data are constantly supplied to the CPU 12, whereby the CPU 12 can properly control the operation of the digital VTR. In that case, since ID data are set in the respective registers 21 to 28 of the ID detector circuit 20, on the basis of the data valid signal, only when the reproduced signal is at a high level, reproduced ID data can be accurately detected in the high speed search mode from this standpoint also.

Further, in this embodiment, since the length of one block of the sub-data area in which the start ID data, the skip ID data or the like particularly required in the high speed search mode are recorded is selected to be shorter than that of one block of the video data area, ID data are recorded at relatively short intervals so that the frequency at which the ID data is detected (reproduced) in the high speed search mode is increased. Therefore, in the high speed search mode, the ID data can be detected more frequently, which can increase the speed of the high speed search mode in which the ID data, for example, can be detected, as compared with the prior art.

Since, as set out above, the ID data is detected by the majority rule, the detection accuracy of ID data can be increased. Furthermore, since only signal portions reproduced during intervals in which accurate signal reproduction takes place are supplied to the majority circuit as ID data for checking by the majority rule, the detection accuracy of ID data can be increased.

While the embodiment of the invention described above is applied to a digital VTR which reproduces a digital video signal, the invention is not limited thereto; it may, for example, be applied to a reproducing apparatus which reproduces a recording medium in which other digital data are recorded.

## Claims

1. Apparatus for reproducing a digital signal recorded in data blocks, each including synchronising data and identifying data, on tracks (T1, etc.) formed slantwise and sequentially on a magnetic tape (1) by a rotary head, which apparatus comprises playback means for driving the magnetic tape (1) at a speed higher than a normal playback speed and reproducing the digital signal from the tracks (T1, etc.), the apparatus being characterised by:
first detector means (8, 11) for detecting the synchronising data in respective data blocks of the reproduced digital signal and generating at least one gate pulse in response to detection of the synchronising data; and second detector means (20) including gate means (21-28), for gating a plurality of sequentially received identifying data in response to said at least one gate pulse, and means (30) for subjecting the gated identifying data to identification on the basis of a majority rule.

2. Apparatus according to claim 1, wherein the gate means comprises a plurality of registers (21-28) for sequentially receiving the plurality of identifying data in response to the gate pulse.

3. Apparatus according to claim 1 or claim 2, which apparatus is capable of reproducing a said digital signal which comprises at least a video data signal and a sub-data signal.

4. Apparatus according to claim 3, wherein the data blocks of the video data signal and the sub-data signal each include identifying data.

5. Apparatus according to claim 4, wherein the identifying data of the video data signal comprises numbers identifying a track and a block to which the reproduced digital signal belongs.

6. Apparatus according to claim 4 or claim 5, wherein the identifying data of the sub-data signal comprises numbers identifying a track, a block and a programme to which the reproduced digital signal belongs.

7. Apparatus according to claim 6, wherein the identifying data of the sub-data signal comprises a start identifying signal and a skip identifying signal.

## Patentansprüche

1. Vorrichtung zur Wiedergabe eines Digitalsignals, das in Spuren (T1 usw.), die von einem rotierenden Kopf in Schrägrichtung und sequentiell auf einem Magnetband (1) erzeugt werden, in Datenblöcken aufgezeichnet ist, die jeweils Synchronisierdaten und Identifizierdaten enthalten,
mit einer Wiedergabeeinrichtung zum Antrieb des Magnetbandes (1) mit einer höheren als der normalen Wiedergabegeschwindigkeit und zur Wiedergabe des Digitalsignals von den Spuren (T1 usw.),
**gekennzeichnet** durch
eine erste Detektoreinrichtung (8, 11) zur Detektierung der Synchronisierdaten in entsprechenden Blöcken des wiedergegebenen Digitalsignals und zur Erzeugung wenigstens eines Auftastimpulses in Abhängigkeit von der Detektierung der Synchronisierdaten,
und eine zweite Detektoreinrichtung (20) mit einer Auftasteinrichtung (21-28) zum Auftasten einer Mehrzahl von sequentiell empfangenen Identifizierdaten in Abhängigkeit von dem wenigstens einen Auftastimpuls sowie mit einer Einrichtung (30), mit der die aufgetasteten Identifizierdaten auf der Basis eines Majoritätsgesetzes einer Identifizierung unterzogen werden können.

2. Vorrichtung nach Anspruch 1, bei der die Auftasteinrichtung eine Mehrzahl von Registern (21-28) für die sequentielle Aufnahme der Mehrzahl von Identifizierdaten in Abhängigkeit von dem Auftastimpuls aufweist.

3. Vorrichtung nach Anspruch 1 oder 2, die in der Lage ist, ein Digitalsignal wiederzugeben, das wenigstens ein Videodatensignal und ein Subdatensignal aufweist.

4. Vorrichtung nach Anspruch 3, bei der die Datenblöcke des Videodatensignals und des Subdatensignals jeweils Identifizierdaten enthalten.

5. Vorrichtung nach Anspruch 4, bei der die Identifizierdaten des Videodatensignals Zahlen enthalten, die eine Spur und einen Block identifizieren, denen das wiedergegebene Digitalsignal angehört.

6. Vorrichtung nach Anspruch 4 oder 5, bei der die Identifizierdaten des Subdatensignals Zahlen enthalten, die eine Spur, einen Block und ein Programm identifizieren, denen das wiedergegebene Digitalsignal angehört.

7. Vorrichtung nach Anspruch 6, bei der die Identifizierdaten des Subdatensignals ein Start-Identifizierungssignal und ein Sprung-Identifizierungssignal enthalten.

## Revendications

1. Appareil de reproduction d'un signal numérique enregistré dans des blocs de données, chacun incluant des données de synchronisation et des données d'identification, sur des pistes (T1, etc ...) formées de manière inclinée et séquentiellement sur une bande magnétique (1) au moyen d'une tête tournante, lequel appareil comprend un moyen de lecture pour entraîner la bande magnétique (1) à une vitesse supérieure à une vitesse de lecture normale et pour reproduire le signal numérique à partir des pistes (T1, etc ...), l'appareil étant caractérisé par :
un premier moyen de détecteur (8, 11) pour détecter les données de synchronisation dans des blocs de données respectifs du signal numérique reproduit et pour générer au moins une impulsion de porte en réponse à la détection des données de synchronisation ; et un second moyen de détecteur (20) incluant un moyen de porte (21-28) pour soumettre à une logique de porte une pluralité de données d'identification reçues séquentiellement en réponse à ladite au moins une impulsion de porte et un moyen (30) pour soumettre les données d'identification soumises à une logique de porte à une identification sur la base d'une règle majoritaire.

2. Appareil selon la revendication 1, dans lequel le moyen de porte comprend une pluralité de registres (21-28) pour recevoir séquentiellement la pluralité de données d'identification en réponse à l'impulsion de porte.

3. Appareil selon la revendication 1 ou 2, lequel appareil permet de reproduire un dit signal numérique qui comprend au moins un signal de données vidéo et un signal de sous-données.

4. Appareil selon la revendication 3, dans lequel les blocs de données du signal de données vidéo et du signal de sous-données incluent chacun des données d'identification.

5. Appareil selon la revendication 4, dans lequel les données d'identification du signal de données vidéo comprennent des numéros identifiant une piste et un bloc auxquels le signal numérique reproduit appartient.

6. Appareil selon la revendication 4 ou 5, dans lequel les données d'identification du signal de sous - données comprennent des numéros identifiant une piste, un bloc et un programme auxquels le signal numérique reproduit appartient.

7. Appareil selon la revendication 6, dans lequel les données d'identification du signal de sous - données comprennent un signal d'identification de début et un signal d'identification de saut.
